# EUROPEAN PATENT APPLICATION

(11) **EP 2 752 277 A1**
(43) Date of publication of application: **09.07.2014**
(21) Application number: 13150248.6
(22) Date of filing: 04.01.2013
(51) Int. Cl.: B26B 27/00, B26B 29/02

(54) **A method of using a safety knife, the safety knife and its use**

(71) Applicant: Kasperek, Kim, 2840 Holte (DK)
(72) Inventor: Kasperek, Kim, 2840 Holte (DK)
(74) Representative: Holme Patent A/S

(57) **Abstract**

A method of using a knife (1;1'), which knife has a knife handle (4), a knife blade (3) extending in elongation of the knife handle (4), safety means (2) including at least one strap (7) having a strap opening (7'), and the at least one strap (7) is secured to or at a free end (5) of the knife handle (4). The method comprises the steps of providing at least one strap (7) with a strap opening (7') having a size selected to configure the at least one strap in a first position and in a subsequent second position, wherein in the first position the operator inserts a finger (9,12) through the strap opening (7') and the at least one strap (7) engages the inserted finger (9,12) and/or the interstice (14) between two adjacent fingers (9,12), and in the second position the at least one strap (7) is arranged lengthwise the knife handle (4), and when kept stretched has a length that is sufficiently long to allow the operator to position a hand (10) on the knife handle (4) but no longer than the selected size of the at least one strap (7) prevents at least the palm (11) of the hand (10) of the operator to reach the knife blade (3) when the finger (9,12) is inserted, inserting the finger (9,12), grasping around the knife handle (4), and performing a cutting action while the finger (9,12) is kept inserted through the strap opening (7'). The operator can work fast and safe from injuries. The safety knife's knife handle (4) can easily be angularly repositioned and rotated in the hand (10) of the operator if desired, and the knife is particular useful in slaughterhouses where the working pace is high and pressure on the workers often causes cutting injuries.

## Description

The invention relates to a method of using a knife, which knife has a knife handle, a knife blade extending in elongation of the knife handle, safety means including at least one strap having a strap opening, and the at least one strap is secured to or at a free end of the knife handle.

There exist many different knifes. Some are dangerous to use and some propose means to enhance safety during use, but suggestions to new and safer methods for using sharp knives are very limited.

From Chinese utility model no. CN 2753531 is known a single-ring knife handle, which can enhance user safety. A firm single-ring finger buckle ring, which is suitable for a forefinger to be conveniently buckled in, is arranged between the lower position of the front part of the existing knife handle and a knife body. When the single-ring knife handle is held in hand, the forefinger is passed through the finger buckle ring, so that the knife handle can be held more firmly when a knife is used and the fingers be protected. The buckle ring is however situated in the same plane as the knife edge close to said knife edge and there still remains a risk that other fingers can reach the knife edge. Moreover, the user has little freedom to arrange his hand or palm on the knife handle due to the fixed position of the rigid buckle ring close to the cutting edge.

From Chinese utility model no. CN 201208751 is known another knife including a knife handle in fixed connection with the knife body. A safety device is arranged on the knife handle, extends at two ends of the knife handle, and includes a first hand protecting part and a second hand protecting part. The first hand protecting part is formed by extending and bending the knife handle at an end connected with the knife body, and the second hand protecting part is formed by extending the knife handle at an end far from the knife body and in the same direction as the first hand protecting part. This known safety device is provided on the knife in a manner that compromises the utility of the knife. The user has reduced contact with the knife handle and maneuvering is cramped.

Old US patent no. US998,046 from 1911 proposes an alternative way of using a broom-corn cutting knife with a handle. Thus US998,046 relates to knives for cutting the heads from broom-corn in order to releive the operators hand from undue strain and enable use of the knife for extended period without the hand becomes cramped and chafed. Instead of holding the knife by it's handle it is suggested to hold around the knife blade during cutting. The knife has a guard that overlies a dull upper edge of the knife blade and provides a seat for the hollow of the hand. A leather loop is secured halfway up the knife handle and lies underneath the heel of the knife blade. This known knife is not safe to use. As also illustrated in the patent document a substantial length of the leather loop extends opposite and parallel to the guard and below the cutting edge. The particular postion and length of the loop are required to enable the operator to use both the leather loop and the guard at the same time. However, when the operator positions the guard in the hollow of the hand and passing his/her fingers through the loop he will inevitable cut his/her fingers when using the knife, e.g. when using maximum force as dictated by US998,046. If the loop is made shorter the operator is unable to reach the guard. Accordingly, US998,046 does not provide a safety knife nor a safe method of using a knife. Moreover, only a short length of the cutting edge is available for cutting so that the operator can only make limited use of cutting edge.

US2005/144790 relates to a training knife for use by e.g. military. One end portion of an elongated lanyard is separably attached to the free end of the handle of the knife, and the other end portion of the lanyard can be provided with a loop, which is size-adjustable due to the provision of a slip knot. The loop surrounds the wrist of one hand of the person using the knife so that the knife always is at hand in case it's use is needed. The loop is tightened around the wrist so that the operator don't loose the knife, and the knife will hang freely from the hand as long as the knife is not used. The lanyard is long and has a length between it's end portions in the range of between about 8 inches and 15 inches. The slip knot makes the loop variable, and this known knife just suggests an alternative to having the knife hanging from the belt. It cannot serve as a safety knife because the long lanyard cannot prevent the operator from accidental contact with the cutting edge during use. The long lanyard may even be in the way if e.g. the knife is used in a slaugterhouse.

US 2003/0208910 relates to a combination knife having at least five cutting surfaces, which the operator accidentally can hurt himself/herselve on. The combination knife has two very sharp gut hooks, one of which is located close to a forefinger grip aperture. Optionally the combination knife has a looped cord for hanging the knife on a belt. No means to reduce the risk of cutting accidents when using this dangerous knife are suggested or hinted to.

In case a known safety knife has an eye for inserting a finger in order to obtain improved control of said knife during it's use, such eye is located close to the knife blade and cannot serve to prevent the operator from grasping around the knife blade or from accidental forward movement of the hand towards the knife blade.

A slaughterhouse worker must work fast and precisely when hand-cutting carcasses. The worker uses an extremely sharp knife in one hand and a safety glove, such as a chain nail glove, on the other hand. Thus, when operating the knife, the other hand is well protected by the glove from being accidentally cut by the knife in case the knife slips or is otherwise misdirected. The hand that holds the knife gets wet and the knife handle slippery due to fat residues and humidity from the carcass thereby increasing the risk of the fingers slipping on the knife handle.

The aim of the present invention is to improve safety of using sharp knives, in particular to provide an improved method for using a sharp knife and a means for eliminating or at least minimizing cutting injuries in butcheries and slaugterhouses.

To this aspect the present invention provides a novel method of using a knife safely, a safety means for use in the method, which safety means and method can be implemented on commercially available knives.

In a second aspect according to the present invention is provided a safety means for a knife handle and a method that allows the operator freedom to arrange his hand in a convenient position around the knife handle without compromising safety during operating the knife.

In a third aspect according to the present invention is provided an elongated knife with a means for improved operator safety, which knife complies with standard sanitary regulations and guidelines for use in slaugterhouses.

In a fourth aspect according to the present invention is provided a method of using an elongated knife with a safety means wherein the risk of self-hurting or accidentally hurting others is eliminated.

In a fifth aspect according to the present invention is provided a method of using an elongated knife with a safety means wherein the method eliminates or at least reduces number of events of accidental contact with the knife blade.

The novel and unique whereby these and other aspects are achieved according to the present invention consists in the fact that the method comprises the steps of
- providing at least one strap with a strap opening having a size selected to configure the at least one strap in a first position and in a subsequent second position, wherein
   - in the first position the operator inserts a finger through the strap opening and the at least one strap engages the inserted finger and/or the interstice between two adjacent fingers, and
   - in the second position the at least one strap is arranged lengthwise the knife handle, and when kept stretched has a length that is sufficiently long to allow the operator to position a hand on the knife handle but no longer than the selected size of the at least one strap prevents at least the palm of the hand of the operator to reach the knife blade when the finger is inserted,
- inserting the finger,
- grasping around the knife handle, and
- performing a cutting action while the finger is kept inserted through the strap opening.

Within the context of the present invention the term "knife handle" means the part of the elongated knife extending opposite the knife blade in elongation of said knife blade. In some embodiments the knife blade can have an extension serving for securing said knife blade to the knife handle. The extension is embedded in the knife handle and may protrude outside the knife handle at the free end. It is to be understood that any protrusion in extension of the knife handle is part of the knife handle.

Within the context of the present invention the term "the free end of the knife handle" means the free end of the elongated knife closest to the operator during use, thus the part of the knife handle opposite the transition to the knife blade. The phrase "secured to the free end" or "secured at the free end" means securing in elongation of the knife handle as well as securing to the sides of the knife handle in proximity or directly to the free end.

Within the context of the present invention the term "strap" means a loop or a bent band or strip having two legs extending opposite each other and defining an opening, the "strap opening", for inserting an object, a finger, in a selected position.

When grasping the knife handle the operator arranges at least one finger through the strap opening of the at least one strap and subsequently places both this finger as well as the other fingers around the handle and at least one finger around a part of the strap. When closing the fingers around the knife handle the at least one strap is stretched out.

The size of the at least one strap, and thus the strap opening and the length of the strap, when the strap is stretched as long as it can, should be adapted to the individual operator and the specific knife. When an operator implements the method consideration needs to be made to arbitrary variables such as e.g. hand sizes, finger thicknesses, finger lengths, knife handle, including length, thickness and shape of knife handle. These variables, correlations and choices need to be made from case to case and have individual character. Thus size of the at least one strap, including size of strap opening and ultimate length of strap legs, are to be selected and/or adjusted to fit the operator in view of the knife handle too, as emphasized by the method according to the present invention. It is important that just the right strap for a certain operator's use of a certain knife is selected. So the method is closely related to a specific operator's anatomy in view of a certain knife. The strap opening is e.g. sized so that in the first position and/or the second position it fits narrowly around the middle part of the inserted finger and is fixed in this position. If the operator has selected a longer strap, the strap may only be so long that the operator is unable to reach the knife blade with the palm of the hand. The strap may engage both around the inserted finger and be catch by the interstitial web between two adjacent fingers. The end of the at least one strap opposite the end, which is secured to the knife handle, may thus hit the skin in the gap between the inserted finger and the neighboring finger, or if more than one finger is inserted, any corresponding gaps, thereby defining and setting a reachable foremost position of the hand in relation to the knife blade in the second position of the at least one strap. This reachable foremost position is a.o. defined by the length of the at least one strap when stretched out, and cannot be made longer or shorter without replacing the at least one strap with another strap. Thus, the at least one strap effectively prevents further forward movement of the hand in relation to the knife handle while performing a cutting action while the finger is kept inserted through the strap opening.

Which size of strap that suits the operator the best is an individual choice and the operator's choice may even differ from task to task provided the conditions mentioned above are not deviated from. Because the at least one strap is fixed to the free end of the knife handle only, the at least one strap can be moved around the longitudinal axis of the knife handle attached to and engaging at least a portion the selected finger, so in the second position the arrangement of the hand on the knife handle and the specific orientation of the inserted finger may also vary. Thus, although at least one finger of the operating hand of the operator is secured in the at least one strap, the operator is still able to position said hand in numerous convenient and ergonomical positions on the knife handle. So, contrary to known safety knives, e.g. the prior art safety knives discussed above, the operator has a great freedom to shift angular hand position on the knife handle during use if e.g. one hand position is convenient for one task and another hand position is better for another task. Accordingly, the at least one strap is secured to or at the free end of the knife handle and can expediently follow the hand during repositioning on the knife handle. Improved cutting safety is obtained by the fact that the at least one strap effectively prevents accidental axial displacement of the hand towards the knife blade. Forward movement is simply stopped. Moving the hand towards the knife blade can simply not take place while the inserted finger is trapped in the strap opening. So the inserted finger, and thus the hand's position, is fixed by the at least one strap, due to the finger engaging the strap, often tightly because the size of the strap opening is selected to fit closely around the inserted finger, e.g. close to the root of the finger or at the middle part of the finger. The risk of the hand slipping on the knife handle out on the knife blade is eliminated or at least minimal.

The method may comprise that a major part of one leg of the stretched at least one strap is held lengthwise the knife handle during performing the cutting action. In the second position the operating hand is placed on the knife handle, and when a finger, which has been inserted through the strap opening, is used for locking the at least one strap to the operating hand, the free loop part of the at least one strap opposite the part of the at least one strap that is secured to or at the free end of the knife handle is caught by said inserted finger or the skin, the interstitial tissue, in the gap between the two adjacent fingers, thereby preventing further movement of said operating hand towards the knife blade. Accidents taking place in e.g. slaughterhouses when the knife handle gets slippery are eliminated. The same applies if more fingers are arranged through the at least one strap.

The most preferred finger to be arranged through the strap opening of the at least one strap is the thumb.

In a preferred embodiment suited for most hand sizes the at least one strap extends about half the length of the knife handle or less when stretched out lengthwise the knife handle. This length is given solely as an example. Since hand sizes and length of knife handles vary no specific limitation to dimensions of strap opening and length of knife handle are appropriate.

In order not to unduly limit the scope of the claimed method the method of the present invention is defined by interrelated factors associated to operator and knife. For example a large hand may require a short strap to avoid that the fingers or hand palm get too close to the knife blade. So it may be preferred that the at least one strap is resizable and/or is detachably secured to the free end of the knife handle. In the non-detachable or detachable embodiment the at least one strap can advantageously be configured or reconfigured on any of the sides of the knife handle to fit either left-handed or right-handed operators. The at least one strap can also be replaced. The at least one strap may e.g. be made in various standard sizes to be used by operators of different hand sizes. Alternatively, the at least one strap can be non-detachable, in which case a selection of safety knives of different strap lengths are intended.

Numerous ways of securing the at least one strap to the free end of the knife handle are intended within the scope of the present invention. The knife handle or an elongation of the knife handle may be provided with a first securing means for securing the at least one strap to or at the free end of said knife handle, and optionally a second securing means may be provided on the at least one strap to secure the at least one strap to the first securing means.

The first securing means is conveniently selected from the group comprising a through-going hole, a recess, a cavity, a plug, a screw, a screw nut, a box nut, a cap a means, a male coupling part, a female coupling part, or combinations of these. This list is however not exhaustive.

The knife handle may e.g. have a premade hole, or a hole is made for the purpose of subsequently securing the at least one strap of the safety means at the free end of said knife handle. The first securing means is provided at the free end of the knife handle, e.g. in elongation of the knife handle or a small distance from the outer free end of said knife handle, to secure the at least one strap to said knife handle. Optionally, a second securing means serves to secure the at least one strap in or to the first securing means, e.g a first securing means in the form of a through-going hole or recess.

In a very simple embodiment a strap loop may be passed through a through-going hole or otherwise secured to a corresponding first securing means so that two strap loop parts protrudes on each side of the hole. The strap loop parts can then be secured to the hole by simply tying a knot. In this way two opposite straps are created for the fingers. In an alternative embodiment the strap can be integrated in the knife handle, e.g. during moulding the knife handle, and extend from or at the free end of the knife handle, e.g. in extension of said knife handle. The above suggested ways of providing the safety means at the free end of the knife handle and/or in proximity of the free end of the knife handle should not be taken as an exhaustive list. Conventional means and combinations of these with the aforementioned means are intended within the scope of the present invention.

A suitable second securing means is selected from the group comprising a plug means fitable into the first securing means, the strap itself, a means for tying the strap to the first securing means, a female coupling part, a male coupling part or combinations of these. This list is however not exhaustive. A plug means, that can be force-fitted into a hole or recess, provides a reliable fixation of the safety means to the knife handle. The first securing means and the second securing means can be of the kind for permanent or detachable securing of the strap to the knife handle.

Within the scope of the present invention the first securing means and the second securing means are configured to be easy-to-clean in order to comply with sanitary regulations and similar guidelines. Thus the joint between the first securing means and the second securing means should preferably be of a kind not accumulating residues from the cutting process so that creation of a bacterial bed is prevented.

Any complementarily shaped securing means may be used to secure the safety means to the knife handle. Snap fittings, frictional engagement, gluing, screws and combinations of these are just examples of ways and means to accomplish securing. Some of these means are most preferred for detachable securing and some for non-detachable securing.

The at least one strap may have a non-stick surface or a protective coating, such as a grease rejecting coating or grease rejecting surface, in order to comply with e.g. sanitary regulations and Food and Drug Administration requirement, in particular requirement for use in slaughterhouses and butcheries.

The at least one strap may be either disposable or reusable. In case of a disposable strap, the strap can simply be cut loose after use, or the second securing means can be otherwise detached from the first securing means. A safety knife free of strap can be cleaned effectively. When the knife is to be used again a new strap is secured to the free end of the clean knife handle. In this embodiment a reduced number of parts needs cleaning thereby reducing the risk that parts of the knife are not been effectively cleaned. In re-usable designs of the safety knife according to the present invention no or substantially no cavities, in which residues such as fat and other slaughterhouse waste, such as blood and meet, can accumulate, are attempted avoided.

In the preferred embodiment the safety means has only one strap, but in an alternative embodiment two straps may be present. Even more straps can be provided and straps for all fingers are foreseen within the scope of the present invention.

The at least one strap is only attached at one single location on the knife handle, namely at or to the free end of the knife handle, thereby leaving the main part of the at least one strap free for being hooked by a finger/the fingers passing through the opening of the one or more straps.

If the least one strap is made of a flexible material the operator can easily move his/her hand around on the knife handle, thus the operator can reposition the hand without taking the finger out of the at least one strap's strap opening. By the term "flexible material" is understood a material that is resilient, bendable but not stretchable. Examples of suitable materials include but are not limited to a plastic strap, a rope, a wire with a plastic coat or combinations of these. It is important that the at least one strap has a fixed length and can be moved around a longitudinal axis of the knife handle. Preferred materials are chemical resistant and mechanical strong, not susceptible to break and rupture, not susceptible to elongation in response to heat, and have good wear resistance.

The invention further relates to a knife for use in the method, which knife has a knife handle, a knife blade extending in elongation of the knife handle, safety means including at least one strap having a strap opening, and the at least one strap is secured to or at a free end of the knife handle. The knife comprises at least one strap with a strap opening having a size selected to configure the at least one strap in a first position and a subsequent second position in which,
- in the first position the operator inserts a finger through the strap opening and the at least one strap engages the inserted finger and/or the interstice between two adjacent fingers, and
- in the second position the at least one strap is arranged lengthwise the knife handle, and when kept stretched has a length that is sufficiently long to allow the operator to position the hand on the knife handle but no longer than the selected size of the at least one strap prevents at least the palm of the hand of the operator to reach the knife blade when the finger is inserted.

As stated during the description of the method above the at least one strap may be detachably or non-detachably secured to or at the free end of the knife handle, to allow the operator to shift or not shift between straps, and allow replacement or disposal of a used strap.

The knife handle or an elongation of the knife handle may be provided with a first securing means for securing the at least one strap to or at the free end of said knife handle, and optionally a second securing means may be provided on the at least one strap to secure it to the first securing means.

The knife and the method described above is particular efficient to use in slaughterhouses or butcheries because the operator is free of the heavy conventional safety glove, use of which often is prescribed for safety purposes.

The invention will be described in further details below with reference to the drawing and exemplary embodiments of a safety knife in methods according to the present invention.
Fig. 1 is a perspective exploded view of a first embodiment of a safety knife according to the present invention,
Fig. 2 shows the same in an assembled state,
Fig. 3 shows, seen from the palm side, a first way of positioning a right hand on the safety knife according to the present invention with the thumb arranged through the strap,
Fig. 4 shows the same where the fingers of the hand are folded around the knife handle,
Fig. 5 shows, seen from the palm side, a second way of positioning a safety means on a second embodiment of a safety knife according to the present invention, and positioning a right hand with the thumb through the strap, and

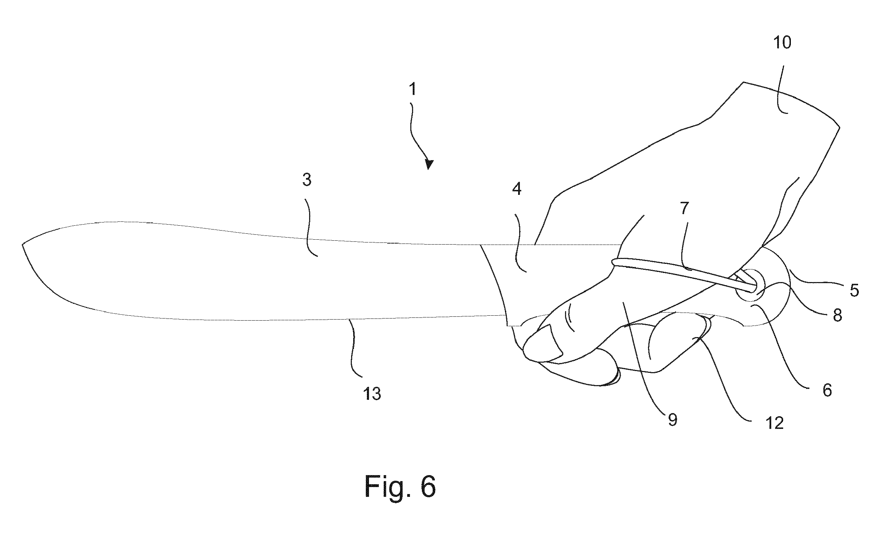

Fig. 6 shows the same where the fingers of the hand are folded around the knife handle.

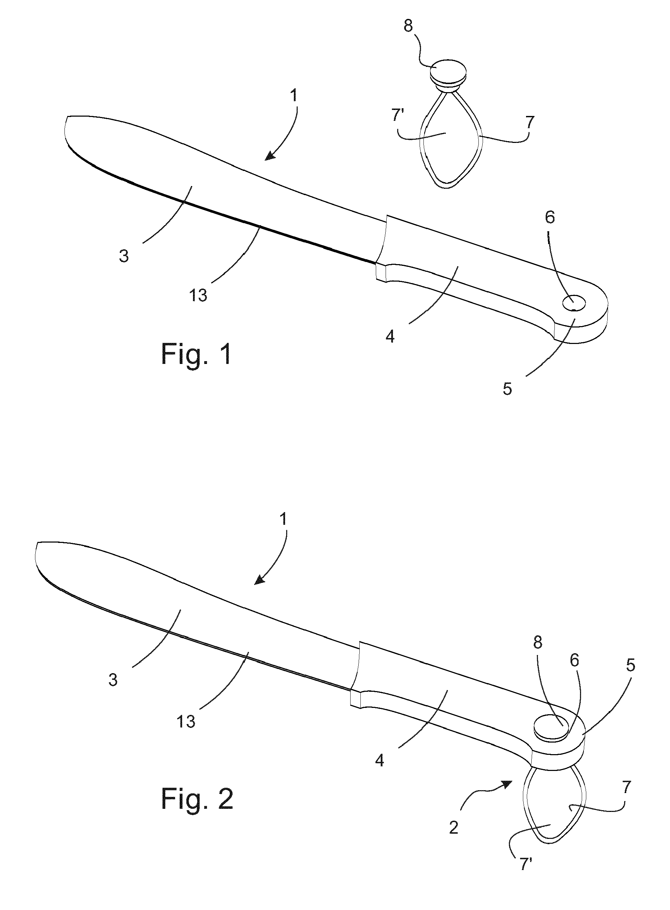

Fig. 1 shows a perspective exploded view of an elongated knife 1 according to the present invention. The elongated knife 1 is, as an example, a slaughter knife 1 provided with a safety means 2. The elongated knife 1 comprises a knife blade 3, with a cutting edge 13, and a knife handle 4. The knife handle 4 has a free end 5 with a first securing means in the form of a through-going hole 6, through which a strap 7 of the safety means 2 can be passed. The strap 7 has a strap opening 7' and is provided with a second securing means 8 in the form of a bush 8 dimensioned to firmly engage the first securing means in the form of the transverse through-going hole 6 in the free end 5 of the knife handle 4. If the bush 8 is permanently secured in the through-going hole 6 the bush 8 can further be fixed by gluing to obtain high securing force. Proper dimensioning is another way of ensuring high securing force.

In the assembled state of the safety knife shown in fig. 2 the safety means 2 is secured to the elongated knife 1. In the present embodiment the second securing means 8, in the form of a bush 8, is firmly embedded in the through-going hole 6. Any male/female coupling is however intended within the scope of the present invention, as well as other ways of securing the safety means 2 to the free end 5 of the knife handle 4 are foreseen. For example instead of the strap 7 being passed through the through-going hole 6 crosswise the longitudinal axis of the knife 1, the safety means 2 could just as well extend in elongation of the knife 1, e.g. being screwed into a knife handle made of wood, composite or plastic, or be embedded in a knife handle during moulding.

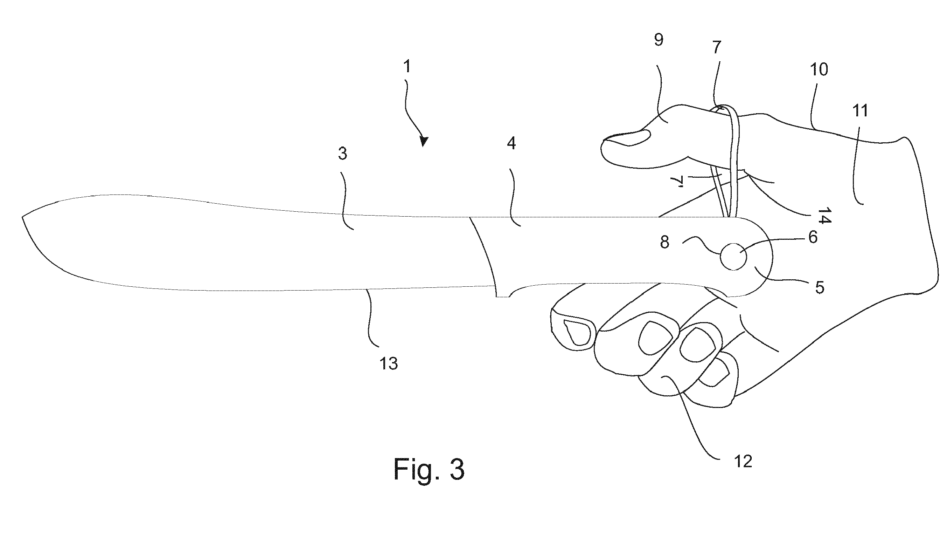

Fig. 3 illustrates how a right-handed operator may grasp the safety knife 1 according to the present invention. The operator puts his/her finger 9, in the present case the thumb 9 of the right hand 10, through the strap opening 7' of strap 7 to position the finger 9 to reach the first position. Then he/her, substantially at the same time, grasps around the knife handle 4 with the palm 11 and the fingers 12. The thumb 9 is locked inside the strap opening 7' of the strap 7 in the second position to prevent the other fingers 12 of the right hand 10 from being able to reach the cutting edge 13 of the knife blade 3 while holding the knife handle 4 during use of the safety knife 1.

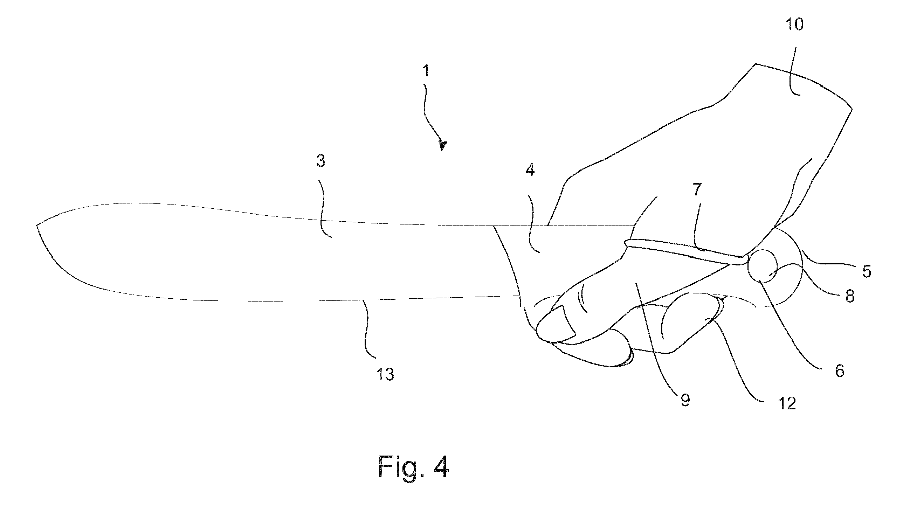

So after having arranged the thumb 9 through the strap opening 7' of the strap 7, as e.g. shown in fig. 3, the operator closes his/her hand 10 around the knife handle 4, as shown in fig. 4, to get a good hold of said knife handle 4. The operator holds the strap 7 lengthwise the knife handle 4. In the hand position shown in fig. 4 the operator is ready to perform the cutting action. The hand 10 simply cannot move forward towards the cutting edge 13 due to the thumb 9 or other finger being trapped by the strap 7. The strap 7 can be moved around or in relation to the longitudinal axis of the knife handle 4 allowing the operator to arrange the knife handle 4 in the hand 10 in various positions, but without releasing the secured finger 9, the thumb 9.

The bush 8 plugs the through-going hole 6, thereby serving as a retainer when the strap 7 is tensioned during use of the safety knife 1. Thus if the bush 8 is releasable, e.g. in a detachable embodiment, or accidentally gets loose of the engagement inside the through-going hole 6, this way of arranging the bush on the side of the knife handle opposite the palm side of the hand creates interaction of bush 8 and the through-going hole 6 so as to provide additional safety against loosing the strap during use of the safety knife.

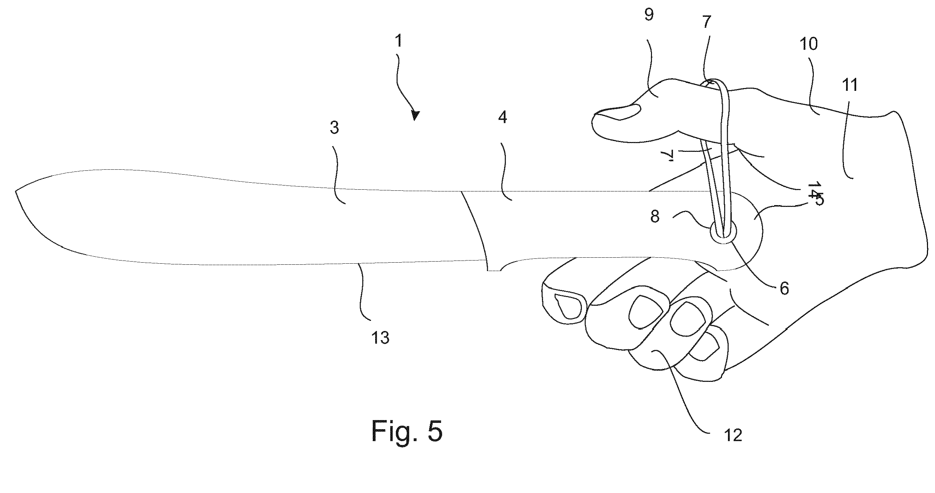

Figs. 4 and 5 show a second embodiment of a safety knife 1' and a method according to the present invention. The second embodiment of the safety knife 1' corresponds substantially to the first embodiment of a safety knife 1 shown in figs. 3 and 4, and for like parts same reference numerals are used. The safety knife 1' differs only in that the bush 8 is secured at the side of the knife handle 4 opposite the hand palm 11, so that the strap 7 protrudes opposite the palm 11, contrary to the first embodiment of the safety knife 1, where the strap 7 protrudes towards the palm 11. In this way the strap needs not to be folded over the knife handle in order to be grasped and a shorter strap can be implemented.

As in the first embodiment of the safety knife 1 the thumb 9 is passed through the strap opening 7' of the strap 7, as shown in fig. 4, and subsequently the fingers 12 are folded around the knife handle 4 to grasp said knife handle 4 in a safe manner, as shown in fig. 5. Also in this embodiment the length of the stretched strap 7 defines the limit for the reachable foremost position of the hand 10 on the knife handle 4, thereby providing a reliable safety precaution in relation to cutting injuries.

Use of the method according to the present invention eliminates the risk that the operator gets injured due to the hand 10 accidentally slipping forward in contact with the cutting edge 13. At least one finger is always caught by the at least one strap, but user-friendliness is not compromised. The operator can still work fast and effectively. The operator is safe from cut injuries at all time during use of the knife according to the present invention. A particular advantage is that the safety knife's knife handle can easily be angularly repositioned and rotated in the operator's hand if desired without loosing the safety attachment between strap and finger.

The knife and the method is particular useful in slaughterhouses where the working pace is high and pressure on the workers often causes cutting injuries.

## Claims

1. A method of using a knife (1;1'), which knife has
- a knife handle (4),
- a knife blade (3) extending in elongation of the knife handle (4),
- safety means (2) including at least one strap (7) having a strap opening (7'), and the at least one strap (7) is secured to or at a free end (5) of the knife handle (4),
**characterized in that** the method comprises the steps of
- providing at least one strap (7) with a strap opening (7') having a size selected to configure the at least one strap in a first position and in a subsequent second position, wherein
- in the first position the operator inserts a finger (9,12) through the strap opening (7') and the at least one strap (7) engages the inserted finger (9,12) and/or the interstice (14) between two adjacent fingers (9,12), and
- in the second position the at least one strap (7) is arranged lengthwise the knife handle (4), and when kept stretched has a length that is sufficiently long to allow the operator to position a hand (10) on the knife handle (4) but no longer than the selected size of the at least one strap (7) prevents at least the palm (11) of the hand (10) of the operator to reach the knife blade (3) when the finger (9,12) is inserted,
- inserting the finger (9,12),
- grasping around the knife handle (4), and
- performing a cutting action while the finger (9,12) is kept inserted through the strap opening (7').

2. A method according to claim 1, **characterized in that** the method comprises that a major part of one leg of the stretched at least one strap (7) is held lengthwise the knife handle (4) during performing the cutting action.

3. A method according to any of claims 1 or 2, **characterized in that** the method comprises that the finger (9,12) inserted in the strap opening (7') is the thumb (9).

4. A method according to any of the preceding claims 1, 2 or 3, **characterized in that** the at least one strap (7) is detachably or non-detachably secured to or at the free end (5) of the knife handle (4).

5. A method according to any of the preceding claims 1 - 4, **characterized in that** the knife handle (4) or an elongation of the knife handle (4) is provided with a first securing means (6) for securing the at least one strap (7) to or at the free end (5) of said knife handle (4), and optionally a second securing means (8) is provided on the at least one strap (2) to secure the at least one strap (7) to the first securing means (6).

6. A method according to claim 5, **characterized in that** the first securing means (6) is selected from the group comprising a through-going hole (6), a recess, a cavity, a plug, a screw, a screw nut, a box nut or a cap a means, a male coupling part, a female coupling part, or combinations of these.

7. A method according to any of claim 5 or 6, **characterized in that** the second securing means (8) is selected from the group comprising a plug means, such as a bush (8), fitable into the first securing means (6), the strap (7) itself, a means for tying the strap to the first securing means (8), a female coupling part, a male coupling part or combinations of these.

8. A method according to any of the preceding claims 1 - 7, **characterized in that** the at least one strap (7) has a non-stick surface or a protective coating, such as a grease rejecting coating or surface.

9. A method according to any of the preceding claims 1 - 8, **characterized in that** the at least one strap (7) is disposable or reusable.

10. A method according to any of the preceding claims 1 - 9, **characterized in that** the safety means (2) has two straps (7).

11. A method according to any of the preceding claims 1 - 10, **characterized in that** the at least one strap (7) is flexible.

12. A knife (1;1') for use in the method according to any of the preceding claims 1 - 11, which knife has
- a knife handle (4),
- a knife blade (3) extending in elongation of the knife handle (4),
- safety means (2) including at least one strap (7) having a strap opening (7'), and
- the at least one strap (7) is secured to or at a free end (5) of the knife handle (4),
**characterized in that** the knife (1;1') comprises
- at least one strap (7) with a strap opening (7') having a size selected to configure the at least one strap (7) in a first position and a subsequent second position in which
- in the first position the operator inserts a finger (9,12) through the strap opening (7') and the at least one strap (7) engages the inserted finger (9,12) and/or the interstice (14) between two adjacent fingers (9,12), and
- in the second position the at least one strap (7) is arranged lengthwise the knife handle (4), and when kept stretched has a length that is sufficiently long to allow the operator to position the hand (10) on the knife handle (4) but no longer than the selected size of the at least one strap (7) prevents at least the palm (11) of the hand (10) of the operator to reach the knife blade (3) when the finger (9,12) is inserted.

13. A knife (1;1') according to claim 12, **characterized in that** the at least one strap (7) is detachably or non-detachably secured to or at the free end (5) of the knife handle (4).

14. A knife (1;1') according to any of the claims 12 or 13, **characterized in that** the knife handle (4) or an elongation of the knife handle (4) is provided with a first securing means (6) for securing the at least one strap (7) to or at the free end (5) of said knife handle (4), and optionally a second securing means (8) is provided on the at least one strap (7) to secure the at least one strap (7) to the first securing means (6).

15. A use of the knife (1;1') according to any of the preceding claims in slaughterhouses or butcheries.
